# EUROPEAN PATENT APPLICATION

(11) **EP 4 843 803 A1**
(43) Date of publication of application: **25.11.2026**
(21) Application number: 25178353.6
(22) Date of filing: 22.05.2025
(51) Int. Cl.: B60K 1/02, B60K 17/16

(54) **ELECTRICAL DRIVE AXLE FOR A VEHICLE, AND VEHICLE COMPRISING SUCH ELECTRICAL DRIVE AXLE**

(71) Applicant: VOLVO TRUCK CORPORATION, 405 08 Göteborg (SE)
(72) Inventor: HIGGINS, Lance, 436 45 ASKIM (SE); LAINE, Leo, 414 84 GÖTEBORG (SE); LAURI, Erik, 431 59 MÖLNDAL (SE)
(74) Representative: Lavoix

(57) **Abstract**

Electrical drive axle (100) for a vehicle (102), comprising:
- a left-hand axle shaft (1) suitable to be connected to left-hand wheel(s) (2);
- a right-hand axle shaft (11) suitable to be connected to right-hand wheel(s) (12);
- a left-hand drive shaft (3) connected to the left-hand axle shaft (1);
- a right-hand drive shaft (13) connected to the right-hand axle shaft (11);
- a first electrical machine (4) for generating driving power for the left-hand wheels (2);
- a first power transmission unit (5) for transmitting the driving power generated by the first electrical machine (4) to the left-hand drive shaft (3);
- a second electrical machine (14) for generating driving power for the right-hand wheels (12);
- a second power transmission unit (15) for transmitting the driving power generated by the second electrical machine (14) to the right-hand drive shaft (13).

The first and second electrical machines (4, 14) and the first and second power transmission units (5, 15) are fixed on a frame portion (10) of the vehicle.

## Description

### TECHNICAL FIELD

The disclosure relates generally to electric motor vehicles. In particular aspects, the disclosure relates to an electrical drive axle for a vehicle, and to a vehicle comprising such electrical drive axle. The disclosure can be applied to medium- or heavy-duty vehicles, such as trucks, buses, and construction equipment, among other vehicle types. It can also be applied to electrified trailers and dollies. Although the disclosure may be described with respect to a particular vehicle, the disclosure is not restricted to any particular vehicle.

### BACKGROUND

Currently, electric drive axles (e-axles) for heavy-duty motor vehicles include one or more electric machines and corresponding transmission and differential gears which are all mounted on the axle. This adds a significant amount of additional weight on the axle which is called unsprung mass. Therefore, the suspension system must work much harder to dampen bumps or irregularities in the road surface and this may impact its ability to keep the tires in contact on the ground which can reduce traction and associated vehicle handling characteristics. It is also more likely that some bumps transfer to the cabin through the suspension and hence ride quality and road noise become worse. In addition, the life expectancy of components of the suspension system may be reduced, or more expensive materials may need to be used. Mounting electrical components on the unsprung mass also exposes them to significant more shock which are short bursts of force measured in standard acceleration of gravitation. This adds further costs to the design or reduces the life expectancy and reliability.

### SUMMARY

According to a first aspect of the disclosure, there is provided an electrical drive axle for a vehicle, comprising:
- a left-hand axle shaft suitable to be connected to one or more left-hand wheels;
- a right-hand axle shaft suitable to be connected to one or more right-hand wheels;
- a left-hand drive shaft connected to the left-hand axle shaft;
- a right-hand drive shaft connected to the right-hand axle shaft;
- a first electrical machine for generating driving power for the one or more left-hand wheels, and a first power transmission unit for transmitting the driving power generated by the first electrical machine to the left-hand drive shaft;
- a second electrical machine for generating driving power for the one or more right-hand wheels, and a second power transmission unit for transmitting the driving power generated by the second electrical machine to the right-hand drive shaft; wherein at least the first and second electrical machines and the first and second power transmission units are fixed on a frame portion of the vehicle. The first aspect of the disclosure may seek to substantially reduce the unsprung mass. A technical benefit may include avoiding harsh shocks and reducing the work that the axle suspension must do to dampen bumps along the roads.

Optionally in some examples, including in at least one preferred example, the first electrical machine, the second electrical machine, the first power transmission unit and the second power transmission unit are fixed on a frame portion of the vehicle each separately from the others. In this way, each of these components has its own fixing. A technical benefit may include making easier mounting and maintenance interventions.

Optionally in some examples, including in at least one preferred example, the electrical drive axle further comprises a first geared coupling for transmitting torque from the left-hand drive shaft to the left-hand axle shaft and a second geared coupling for transmitting torque from the right-hand drive shaft to right-hand axle shaft. A technical benefit may include splitting the total torque needed into a dual type transmission, thereby increasing reliability and flexibility of operations.

Optionally in some examples, including in at least one preferred example, the electrical drive axle further comprises a casing for housing at least part of the left-hand axle shaft and right-hand axle shaft. A technical benefit may include defining a proper protection environment for at least some of the components used. In addition, a so-called rigid beam axle design is realized, which allows for simpler and lighter weight suspensions as opposed to independent wheel suspensions.

Optionally in some examples, including in at least one preferred example, at least one of the first geared coupling and the second geared coupling is at least partially housed inside the casing. A technical benefit may include accommodating such components in a protected environment, for example from vibrations, dirt, water spay, etc. In addition, these gear couplings allow for additional speed reductions from the electrical machine output shaft speeds.

Optionally in some examples, including in at least one preferred example, the casing is configured to allow independent rotations along the longitudinal axis of the axle between the left-hand axle shaft and the right-hand axle shaft. A technical benefit may include improving Torque Vectoring, thereby enabling several additional vehicle benefits like reducing the turning radius at slow speeds and improving the vehicle dynamic stability at high speeds.

Optionally in some examples, including in at least one preferred example, the electrical drive axle further comprises an electronic controller which drives the first electrical machine and the second electrical machine to thereby obtain a desired rotating speed of the one or more left-hand wheels and right-hand wheels. A technical benefit may include for example speed compensation during turns without the need of a differential gear which adds unsprung mass. In addition, torque vectoring can be applied to improve independent wheel traction and improve cornering performance or compensate for side wind pushing on the vehicle body. Shorter turning radius is also achievable.

Optionally in some examples, including in at least one preferred example, with reference to a top view, the first power transmission unit and the second power transmission unit are positioned on opposite sides with respect a longitudinal axis of the axle. A technical benefit may include having an optimized distribution of components in terms of space occupancy and weight. In addition, this may enable an installation of the drive axles with minimal working angles to avoid driveline vibrations.

Optionally in some examples, including in at least one preferred example, with reference to a top view, the first electrical machine and the second electrical machine are positioned on opposite sides with respect to a longitudinal axis of the axle. A technical benefit may include having an optimized distribution of components in terms of space occupancy and weight. In addition, this may enable an installation of the drive axles with minimal working angles to avoid driveline vibrations.

Optionally in some examples, including in at least one preferred example, with reference to a top view, the left-hand drive shaft and the right-hand drive shaft are positioned on opposite sides with respect a longitudinal axis of the axle. A technical benefit may include having an optimized distribution of components in terms of space occupancy and weight. In addition, this may enable an installation of the drive axles with minimal working angles to avoid driveline vibrations.

Optionally in some examples, including in at least one preferred example, the first and second electrical machines are fixed mechanically on said frame portion of the vehicle in a removable way. A technical benefit may include facilitating the installation and dismantling operations, for example for carrying out maintenance.

Optionally in some examples, including in at least one preferred example, the first and second power transmission units are fixed mechanically on said frame portion of the vehicle in a removable way. A technical benefit may include facilitating the installation and dismantling operations, for example for carrying out maintenance.

Optionally in some examples, including in at least one preferred example, the electrical drive axle further comprises fasteners which mechanically connect, in a removable way, the first and second electrical machines and/or the first and second power transmission units onto the frame portion of the vehicle. A technical benefit may include facilitating, with a very easy and cost effective solution, the installation and dismantling operations, for example for carrying out maintenance.

Optionally in some examples, including in at least one preferred example, with reference to a top view, the first electrical machine and the second electrical machine are fixed on said frame portion of the vehicle substantially symmetrically to each other with reference to the midpoint of the longitudinal axis of the axle. A technical benefit may include having a symmetric distribution of components with an optimized space occupancy and a balanced distribution of their weights. In addition, this may enable an installation of the drive axles with minimal working angles to avoid driveline vibrations.

Optionally in some examples, including in at least one preferred example, with reference to a top view, the first power transmission unit and the second power transmission unit are fixed on said frame portion of the vehicle substantially symmetrically to each other with reference to the midpoint of the longitudinal axis of the axle. A technical benefit may include having a symmetric distribution of components with an optimized space occupancy and a balanced distribution of their weights. In addition, this may enable an installation of the drive axles with minimal working angles to avoid driveline vibrations.

Optionally in some examples, including in at least one preferred example, with reference to a top view, the left-hand drive shaft and the right-hand drive shaft are connected to the first power transmission unit and the respective second power transmission unit and are disposed substantially symmetrically to each other with reference to the midpoint of the longitudinal axis of the axle. A technical benefit may include having a symmetric distribution of components with an optimized space occupancy and a balanced distribution of their weights. In addition, this may enable an installation of the drive axles with minimal working angles to avoid driveline vibrations.

According to a second aspect of the disclosure, there is provided a vehicle comprising at least one electrical drive axle according to the disclosure. The second aspect of the disclosure may seek to provide a vehicle with a substantially reduced unsprung mass. A technical benefit may include avoiding harsh shocks on critical electrical components and reducing the work that the axle suspension must do to dampen bumps along the roads.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary front view which illustrates an electrical drive axle for a vehicle, according to an example.
**FIG. 2** is an exemplary top view which illustrates an electrical drive axle for a vehicle, according to an example.
**FIG. 3** is a view of an exemplary motor vehicle using an electrical drive axle according to the disclosure.

### DETAILED DESCRIPTION

The detailed description set forth below provides information and examples of the disclosed technology with sufficient detail to enable those skilled in the art to practice the disclosure.

At present, electric drive axles for medium- or heavy-duty motor vehicles include one or more electric machines and corresponding transmission and differential gears which are all mounted on the axle. This adds a significant amount of additional weight on the axle, also called unsprung mass, and suspension systems must work harder to dampen irregularities or bumps in the road surface. This may impact the capability to keep the tires in contact with the road, thereby reducing traction and associated vehicle's handling characteristics. It is also more likely that some bumps may transfer vibrations to the cabin through the suspension and hence ride quality and road noise may become worse. In addition, the life expectancy of components of the suspension systems may be reduced, or more expensive materials may be needed. Also, mounting electrical components on the unsprung mass exposes them to significant more shock. This adds further cost to the design and in general in more maintenance interventions.

The present disclosure provides an electrical drive axle for a vehicle where the unsprung mass is substantially reduced thereby avoiding harsh shocks typical in known electrical drive axles and reducing the work that the axle suspension must do to dampen bumps along the roads.

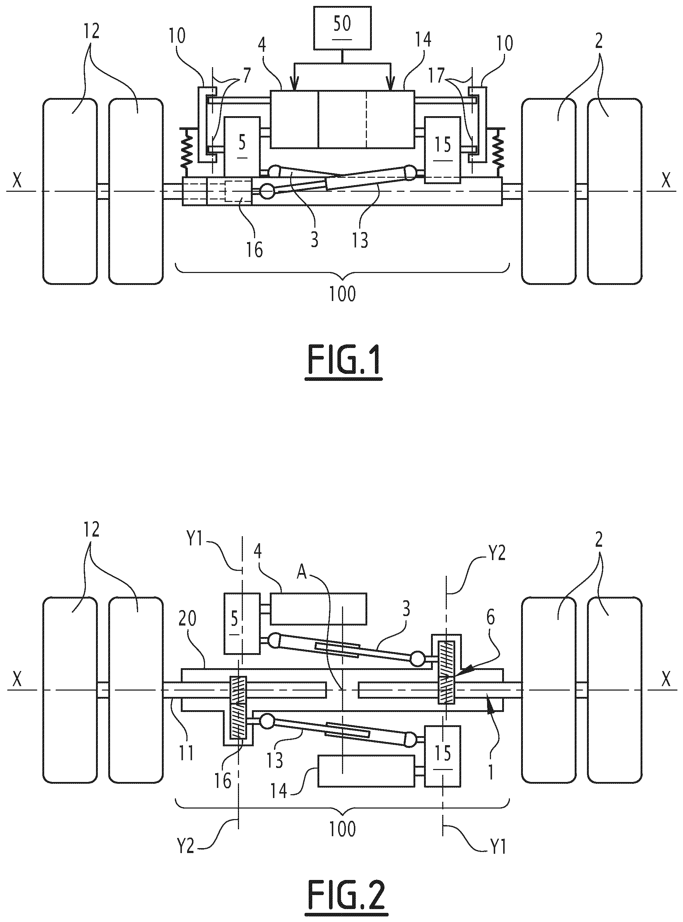

FIG. 1 and FIG. 2 are a front view and respectively a top view which illustrate an exemplary electrical drive axle for a vehicle, according to the disclosure, therein indicated by the overall reference number 100.

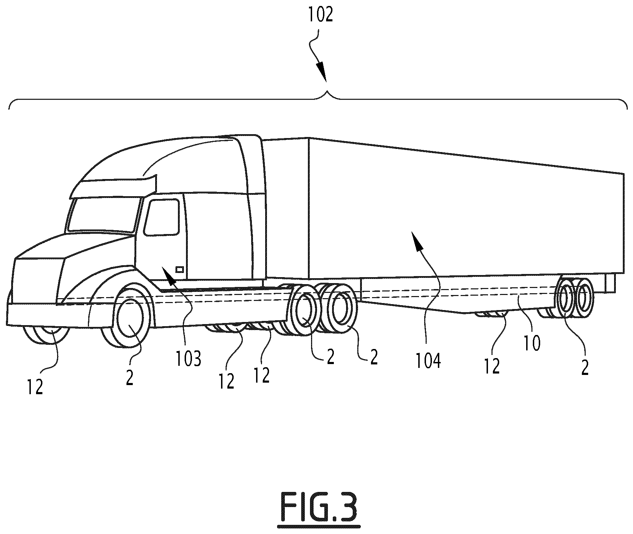

FIG. 3 shows an example of a motor vehicle indicated by the overall reference number 102.

In the example illustrated in FIG. 3, the motor vehicle 102 is a truck that comprises a tractor 103 and a trailer 104.

Clearly, the motor vehicle on which the electrical drive axle 100 according to the present disclosure can be installed can be any type of motor vehicle, such as for instance a light, medium or heavy duty commercial vehicle just to mention some ones. Additionally, the electrical drive axle 100 according to the disclosure can be installed on any type of heavy-duty trailer or dolly.

As illustrated in FIG. 1 and FIG. 2, the electrical drive axle 100 according to the present disclosure comprises at least:
- a left-hand axle shaft 1 suitable to be connected to one or more left-hand wheels 2;
- a right-hand axle shaft 11 suitable to be connected to one or more right-hand wheels 12;
- a left-hand drive shaft 3 connected to the left-hand axle shaft 1;
- a right-hand drive shaft 13 connected to the right-hand axle shaft 11;
- a first electrical machine 4 for generating driving power for the one or more left-hand wheels 2, and a first power transmission unit 5 for transmitting the driving power generated by the first electrical machine 4 to the left-hand drive shaft 3;
- a second electrical machine 14 for generating driving power for the one or more right-hand wheels 12, and a second power transmission unit 15 for transmitting the driving power generated by the second electrical machine 14 to the right-hand drive shaft 13.

In particular, in the example illustrated in FIG. 1 and FIG. 2, the left-hand drive shaft 3 and the right-hand drive shaft 13 are drive shafts with slip joint.

In the example illustrated in FIG. 3, the reference left-hand wheels 2 and right-hand wheels 12 are shown on the front and the rear axles of the tractor 103. However, the electrical drive axle 100 according to the present disclosure can be applied to any suitable axle of vehicle, such as the axles, and in particular the rear axle(s) of a tractor, and any axle of a trailer or dolly as well.

In the electrical drive axle 100 according to the present disclosure, at least the first and second electrical machines 4 and 14, and the corresponding first and second power transmission units 5 and 15 are fixed on a frame portion 10 of the vehicle 102. The frame portion 10 of the vehicle 102 represents the mechanical structure whereby all the suspended components (or sprung mass) are fixed.

In some possible examples, the frame portion 10 is constituted for example by the frame rail of the vehicle 102, and is schematically represented in FIG. 3 by the dotted line 10.

In some possible examples, the first electrical machine 4, the second electrical machine 14, the first power transmission unit 5 and the second power transmission unit 15 are fixed on the frame portion 10 of the vehicle 102 separately from each other.

In some possible examples, the electrical drive axle 100 further comprises a first geared coupling 6 for transmitting torque from the left-hand drive shaft 3 to the left-hand axle shaft 1.

In some possible examples, the electrical drive axle 100 further comprises a second geared coupling 16 for transmitting torque from the right-hand drive shaft 13 to right-hand axle shaft 11.

In some possible examples, the electrical drive axle 100 further comprises a casing 20 for housing at least part of the left-hand axle shaft 1 and right-hand axle shaft 11.

The casing 20 can be realized in any suitable material.

In some possible examples, the first geared coupling 6 is at least partially housed inside the casing 20.

In some possible examples, the second geared coupling 16 is at least partially housed inside the casing 20.

In some possible examples, the casing 20 is configured to allow independent rotations along the longitudinal axis X of the electrical drive axle 100 between the left-hand axle shaft 1 and the right-hand axle shaft 11.

In some possible examples, the electrical drive axle 100 further comprises an electronic controller, schematically represented in FIG. 1 by the reference number 50 which is configured to drive the first electrical machine 4 and the second electrical machine 14 to thereby obtain a desired rotating speed of the one or more left-hand wheels 2 and of the one or more right-hand wheels 12.

The controller 50 can be constituted by or comprised in the electronic control unit (ECU) of the motor vehicle 102, or can be a separate electronic controller specifically devised for the functionalities of the electrical drive axle 100 according to the present disclosure.

The controller 50 is adapted for example to execute instructions from a computer-readable medium to perform any of the functions or processing described herein. While the controller 50 is represented in FIG. 1 by a single box, it may include any collection of devices that individually or jointly execute a set (or multiple sets) of instructions to perform any of the functions or processing discussed herein. Accordingly, any reference in the disclosure and/or claims to a controller or equivalently to an electronic controller or electronic control unit (ECU), etc., includes reference to one or more such devices to individually or jointly execute a set (or multiple sets) of instructions to perform such functions or processing.

In particular, the controller 50 may comprise at least one computing device or electronic device capable of including firmware, hardware, and/or executing software instructions to implement the functionality/processing described herein. The controller 5 may include processing circuitry (e.g., processing circuitry including one or more processor devices or control units), a memory, such as the data storage. The processing circuitry may include any number of hardware components for conducting data or signal processing or for executing computer code stored in a memory. The processing circuitry may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry may further include computer executable code that controls operation of the programmable device.

In some possible examples, with reference to a top view of the electric drive axle 100, as for instance illustrated in FIG. 2, the first power transmission unit 5 and the second power transmission unit 15 are positioned on opposite sides with respect to the longitudinal axis X of the axle 100.

In some possible examples, with reference to a top view of the electric drive axle 100, as for instance illustrated in FIG. 2, the first electrical machine 4 and the second electrical machine 14 are positioned on opposite sides with respect to the longitudinal axis X of the axle 100.

In some possible examples, with reference to a top view of the electric drive axle 100, as for instance illustrated in FIG. 2, the left-hand drive shaft 3 and the right-hand drive shaft 13 are positioned on opposite sides with respect to the longitudinal axis X of the axle 100.

In some possible examples, with reference to a top view of the electric drive axle 100, as for instance illustrated in FIG. 2, the first power transmission unit 5 and the second power transmission unit 15 are fixed on the frame portion 10 of the vehicle 102, for example substantially symmetrically to each other with reference to the midpoint (indicated by the capital letter A in FIG. 2) of the longitudinal axis X of the axle 100.

In some possible examples, as illustrated for example in FIG. 1, the first power transmission unit 5 and the second power transmission unit 15 are fixed directly on the frame portion 10 of the vehicle 102.

Clearly, the first power transmission unit 5 and the second power transmission unit 15 may be fixed on the frame portion 10 of the vehicle 102 with the interposition of one or more components, such as a mounting bracket on each of the left and right sides.

In some possible examples, the first power transmission unit 5 and the second power transmission unit 15 are fixed mechanically on the frame portion 10 of the vehicle 102 in a removable way.

In some possible examples, with reference to a top view of the electric drive axle 100, as for instance illustrated in FIG. 2, the first electrical machine 4 and the second electrical machine 14 are fixed on the frame portion 10 of the vehicle 102, for example substantially symmetrically to each other with reference to the midpoint (indicated by the capital letter A in FIG. 2) of the longitudinal axis X of the axle 100.

In some possible examples, as illustrated for example in FIG. 1, the first electrical machine 4 and the second electrical machine 14 are fixed directly on the frame portion 10 of the vehicle 102.

Clearly, the first electrical machine 4 and the second electrical machine 14 may be fixed on the frame portion 10 of the vehicle 102 with the interposition of one or more components, such as a mounting bracket on each of the left and right sides.

In some possible examples, the first electrical machine 4 and the second electrical machine 14 are fixed mechanically on the frame portion 10 of the vehicle 102 in a removable way.

In some possible examples, the first power transmission unit 5 and the second power transmission unit 15 are fixed mechanically on the frame portion 10 of the vehicle 102 in a removable way by means of fasteners, schematically represented in FIG. 1 by the reference number 7 and respectively 17.

In some possible examples, the first power transmission unit 5 and the second power transmission unit 15 are fixed mechanically on the frame portion 10 of the vehicle 102 in a removable way by means of fasteners, schematically represented in FIG. 1 by the reference number 7 and respectively 17.

Likewise, in some possible examples, the first electrical machine 4 and the second electrical machine 14 are fixed mechanically on the frame portion 10 of the vehicle 102 in a removable way by means of fasteners, also schematically represented in FIG. 1 by the same reference number 7 and respectively 17.

For example, such fasteners 7 and 17 may comprise or be constituted by screws, bolts etc.

Clearly any other type of fasteners and/or other suitable way of fixing, may be used.

In some possible embodiments, the first electrical machine 4 and the second electrical machine 14 re connected to the first power transmission unit 5 and the respective second power transmission unit 15 and are disposed for example substantially symmetrically to each other with reference to the midpoint A of the longitudinal axis X of the axle 100. These connections of the electrical machines 4 and 14 to the respectively associated transmission units 5 and 15 are not intended to hold up the electrical machines which also should be serviceable independently from the transmission units.

In some possible examples, with reference to a top view of the electric drive axle 100, as for instance illustrated in FIG. 2, the left-hand drive shaft 3 and the right-hand drive shaft 13 are connected to the first power transmission unit 5 and the respective second power transmission unit 15 and are disposed for example substantially symmetrically to each other with reference to the midpoint A of the longitudinal axis X of the axle 100.

In some possible examples, with reference to a top view of the electric drive axle 100, the first power transmission unit 5 and the second power transmission unit 15 are mounted substantially perpendicular to the longitudinal axis X of the axle 100, e.g. along the substantially vertical axes indicated in FIG. 2 by the referenceY1.

In some possible examples, with reference to a top view of the electric drive axle 100, the first geared coupling 6 and the second geared coupling 16 are mounted substantially perpendicular to the longitudinal axis X of the axle 100, e.g. along the substantially vertical axes, indicated in FIG. 2 by the referenceY2.

Depending on the applications, the axes Y1 and Y2 may be parallel or may even coincide.

In some possible examples, with reference to a top view of the electric drive axle 100, as for instance illustrated in FIG. 2, the first power transmission unit 5 and the second power transmission unit 15 are mounted parallel to the longitudinal axis X of the axle 100.

The present disclosure provides the following examples.

**Example 1:** An electrical drive axle 100 for a vehicle 102, comprising at least:
- a left-hand axle shaft 1 suitable to be connected to one or more left-hand wheels 2;
- a right-hand axle shaft 11 suitable to be connected to one or more right-hand wheels 12;
- a left-hand drive shaft 3 connected to the left-hand axle shaft 1;
- a right-hand drive shaft 13 connected to the right-hand axle shaft 11;
- a first electrical machine 4 for generating driving power for the one or more left-hand wheels 2, and a first power transmission unit 5 for transmitting the driving power generated by the first electrical machine 4 to the left-hand drive shaft 3;
- a second electrical machine 14 for generating driving power for the one or more right-hand wheels 12, and a second power transmission unit 15 for transmitting the driving power generated by the second electrical machine 14 to the right-hand drive shaft 13; wherein at least the first and second electrical machines 4, 14 and the first and second power transmission units 5, 15 are fixed on a frame portion 10 of the vehicle 102.

**Example 2:** The electrical drive axle 100 of example 1, wherein the first electrical machine 4, the second electrical machine 14, the first power transmission unit 5 and the second power transmission unit 15 are fixed on a frame portion 10 of the vehicle 102 separately from each other.

**Example 3:** The electrical drive axle 100 of any of examples 1-2, further comprising a first geared coupling 6 for transmitting torque from the left-hand drive shaft 3 to the left-hand axle shaft 1 and a second geared coupling 16 for transmitting torque from the right-hand drive shaft 13 to right-hand axle shaft 11.

**Example 4:** The electrical drive axle 100 of any of examples 1-3, further comprising a casing 20 for housing at least part of the left-hand axle shaft 1 and right-hand axle shaft 11.

**Example 5:** The electrical drive axle 100 of examples 3 and 4, wherein at least one of the first geared coupling 6 and second geared coupling 16 is at least partially housed inside said casing 20.

**Example 6:** The electrical drive axle 100 of example 4, wherein the casing 20 allows independent rotations along the longitudinal axis X of the axle 100 between the left-hand axle shaft 1 and the right-hand axle shaft 11.

**Example 7:** The electrical drive axle 100 of any of examples 1-6, further comprising an electronic controller 50 which drives the first electrical machine 4 and the second electrical machine 14 to thereby obtain a desired rotating speed of the one or more left-hand wheels 2 and right-hand wheels 12.

**Example 8:** The electrical drive axle 100 of any of examples 1-7, wherein, with reference to a top view, the first power transmission unit 5 and the second power transmission unit 15 are positioned on opposite sides with respect a longitudinal axis X of the axle 100.

**Example 9:** The electrical drive axle 100 of any of examples 1-8, wherein, with reference to a top view, the first electrical machine 4 and the second electrical machine 14 are positioned on opposite sides with respect a longitudinal axis X of the axle 100.

**Example 10:** The electrical drive axle 100 of any of examples 1-9, wherein, with reference to a top view, the left-hand drive shaft 3 and the right-hand drive shaft 13 are positioned on opposite sides with respect a longitudinal axis X of the axle 100.

**Example 11:** The electrical drive axle 100 of any of examples 1-10, wherein the first and second electrical machines 4, 14 are fixed mechanically on said frame portion 10 of the vehicle 102 in a removable way.

**Example 12:** The electrical drive axle 100 of any of examples 1-11, wherein the first and second power transmission units 5, 15 are fixed mechanically on said frame portion 10 of the vehicle 102 in a removable way.

**Example 13:** The electrical drive axle 100 of any of examples 11 and 12, further comprising fasteners 7, 17 mechanically connecting, in a removable way, the first and second electrical machines 4, 14 and/or the first and second power transmission units 5, 15 on the frame portion 10 of the vehicle 102.

**Example 14:** The electrical drive axle 100 of any of examples 1-13, wherein, with reference to a top view, the first power transmission unit 5 and the second power transmission unit 15 are fixed on said frame portion 10 of the vehicle 102 substantially symmetrically to each other with reference to the midpoint A of the longitudinal axis X of the axle 100.

**Example 15:** The electrical drive axle 100 of any of examples 1-14, wherein, with reference to a top view, the first electrical machine 4 and the second electrical machine 14 are fixed on said frame portion 10 of the vehicle 102 substantially symmetrically to each other with reference to the midpoint A of the longitudinal axis X of the axle 100.

**Example 16:** The electrical drive axle 100 of any of examples 1-15, wherein with reference to a top view, the left-hand drive shaft 3 and the right-hand drive shaft 13 are connected to the first power transmission unit 5 and the respective second power transmission unit 15 and are disposed substantially symmetrically to each other with reference to the midpoint A of the longitudinal axis X of the axle 100.

**Example 17:** a vehicle 102 comprising at least one electrical drive axle 100 of any of examples claims 1-16.

In practice, according to the example(s) of the electrical drive axle of the present disclosure, the unsprung mass is substantially reduced, and the work that the axle suspension must do to dampen bumps along the roads is made easier. This also reduces the likelihood that some bumps will transfer to the cabin through the suspension and hence ride quality and road noise will improve.

This may allow to further optimize the suspension design and also reduce the load on wear components. This also makes it easier for the suspension to keep the tires on the ground therefore improving available traction which also contributes to better vehicle handling characteristics.

Mounting of the electric machines and power transmission units on the frame also substantially reduce the shock inputs from the road on these components which will improve the life expectancy and reliability of the electric axle.

Further, instead of one high torque electric machine mounted on the drive axle together with a differential, in the electrical axle according to the present disclosure, the total torque needed is split into two separate lower torque electric machines that are mounted on the frame. Each electric machine powers one side of the drive tires, thereby avoiding the need for a heavy differential gear.

In particular, the torque required to each of the two electric machines may be in the range of what is commonly used for smaller passenger cars, hence there may benefit from high volume production of such cars with a lower product cost. Moreover, thanks to the suspension on the frame, the shock and vibration requirements for bigger vehicles, and in particular for a light or medium duty vehicle, can be tuned for these components to approach those in passenger cars.

Splitting the torque into left-hand and right-hand transmission including both positive and negative torque, also called Torque Vectoring, enables several additional benefits for a vehicle, such reducing the turning radius at slow speeds and improving the vehicle dynamic stability at high speeds. The later could be used for example for supporting a lane keeping functionality in various environmental conditions, e.g. strong side winds or even when front axle steering systems lack capabilities to change the trajectory of the vehicle.

The use of two electric machines also improves the dependability of the vehicle. For instance, if one of the electric machines fails, it will still be possible for the vehicle to either complete its mission or drive to a service center even if with reduced but still possible performance.

The power from each electric machine is transmitted to the axle via a corresponding drive shaft with a slip joint which effectively compensates for any motion between the axle and the frame.

The axle has independent right- and left-hand wheel shafts that allow, under the control of the controller 50, speed compensation during turns. In addition, torque vectoring can be applied to improve independent wheel traction and improve cornering performances or compensate for side wind pushing on the vehicle body. A shorter turning radius is also achievable which is important for distribution vehicles.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. An electrical drive axle (100) for a vehicle (102), comprising at least:
- a left-hand axle shaft (1) suitable to be connected to one or more left-hand wheels (2);
- a right-hand axle shaft (11) suitable to be connected to one or more right-hand wheels (12);
- a left-hand drive shaft (3) connected to the left-hand axle shaft (1);
- a right-hand drive shaft (13) connected to the right-hand axle shaft (11);
- a first electrical machine (4) for generating driving power for the one or more left-hand wheels (2), and a first power transmission unit (5) for transmitting the driving power generated by the first electrical machine (4) to the left-hand drive shaft (3);
- a second electrical machine (14) for generating driving power for the one or more right-hand wheels (12), and a second power transmission unit (15) for transmitting the driving power generated by the second electrical machine (14) to the right-hand drive shaft (13); wherein at least the first and second electrical machines (4, 14) and the first and second power transmission units (5, 15) are fixed on a frame portion (10) of the vehicle (102).

2. The electrical drive axle (100) of claim 1, wherein the first electrical machine (4), the second electrical machine (14), the first power transmission unit (5) and the second power transmission unit (15) are fixed on a frame portion (10) of the vehicle (102) separately from each other.

3. The electrical drive axle (100) of any of claims 1-2, further comprising a first geared coupling (6) for transmitting torque from the left-hand drive shaft (3) to the left-hand axle shaft (1) and a second geared coupling (16) for transmitting torque from the right-hand drive shaft (13) to right-hand axle shaft (11).

4. The electrical drive axle (100) of any of claims 1-3, further comprising a casing (20) for housing at least part of the left-hand axle shaft (1) and right-hand axle shaft (11).

5. The electrical drive axle (100) of claims 3 and 4, wherein at least one of said first geared coupling (6) and second geared coupling (16) is at least partially housed inside said casing (20).

6. The electrical drive axle (100) of claim 4, wherein the casing (20) allows independent rotations along the longitudinal axis (X) of the axle (100) between the left-hand axle shaft (1) and the right-hand axle shaft (11).

7. The electrical drive axle (100) of any of claims 1-6, further comprising an electronic controller (50) which drives the first electrical machine (4) and the second electrical machine (14) to thereby obtain a desired rotating speed of the one or more left-hand wheels (2) and right-hand wheels (12).

8. The electrical drive axle (100) of any of claims 1-7, wherein, with reference to a top view, the first power transmission unit (5) and the second power transmission unit (15) are positioned on opposite sides with respect a longitudinal axis (X) of the axle (100).

9. The electrical drive axle (100) of any of claims 1-8, wherein, with reference to a top view, the first electrical machine (4) and the second electrical machine (14) are positioned on opposite sides with respect a longitudinal axis (X) of the axle (100).

10. The electrical drive axle (100) of any of claims 1-9, wherein, with reference to a top view, the left-hand drive shaft (3) and the right-hand drive shaft (13) are positioned on opposite sides with respect a longitudinal axis (X) of the axle (100).

11. The electrical drive axle (100) of any of claims 1-10, wherein the first and second electrical machines (4, 14) are fixed mechanically on said frame portion (10) of the vehicle (102) in a removable way.

12. The electrical drive axle (100) of any of claims 1-11, wherein the first and second power transmission units (5, 15) are fixed mechanically on said frame portion (10) of the vehicle (102) in a removable way.

13. The electrical drive axle (100) of any of claims 11 and 12, comprising fasteners (7, 17) mechanically connecting, in a removable way, the first and second electrical machines (4, 14) and/or the first and second power transmission units (5, 15) on the frame portion (10) of the vehicle (102).

14. The electrical drive axle (100) of any of claims 1-13, wherein, with reference to a top view:
- the first power transmission unit (5) and the second power transmission unit (15) are fixed on said frame portion (10) of the vehicle (102) substantially symmetrically to each other with reference to the midpoint (A) of the longitudinal axis (X) of the axle (100), and/or
- the first electrical machine (4) and the second electrical machine (14) are fixed on said frame portion (10) of the vehicle (102) substantially symmetrically to each other with reference to the midpoint (A) of the longitudinal axis (X) of the axle (100).

15. A vehicle (102) comprising at least one electrical drive axle (100) of any of claims 1-14.
